# EUROPEAN PATENT SPECIFICATION

(11) **EP 3 144 909 B1**
(45) Date of publication and mention of the grant of the patent: **29.12.2021**
(21) Application number: 15196082.0
(22) Date of filing: 24.11.2015
(51) Int. Cl.: G08B 21/02

(54) **ENTRY LOCATION SYSTEMS, METHODS AND DEVICES**
EINGANGSORTUNGSSYSTEME, -VERFAHREN UND -VORRICHTUNGEN
SYSTÈMES, PROCÉDÉS ET DISPOSITIFS DE LOCALISATION D'ENTRÉE

(30) Priority: 15.09.2015 GB 201516337
(43) Date of publication of application: 22.03.2017
(73) Proprietor: Bishop, Marcus, Norfolk NR31 9UX (GB)
(72) Inventor: Bishop, Marcus, Norfolk NR31 9UX (GB)
(74) Representative: ip21 Ltd

(56) References cited:
- EP-A1- 0 915 442
- WO-A2-01/13137
- US-A1- 2009 032 517
- US-A1- 2012 249 798
- US-B1- 6 275 153
- None

## Description

### Field of the Invention

The present invention relates to entity location systems, methods and devices, and particularly to entity location systems, methods and devices specifically adapted for alpine environments, including but not limited to ski resorts, ski pistes and ski-able off-piste areas, and wherein entities such as an piece of ski equipment, and any individual person or group of such can easily be misplaced, lost, buried, or otherwise separated from the individual or group of such with which that piece of equipment or person or persons would usually be in close proximity.

For the purposes hereof, the word entity is to be considered as encompassing both persons and equipment, the latter of these including any particular item of ski equipment worn, carried or otherwise secured to a person, common examples including any type of ski or snowboard and their bindings, ski and board boots, ski poles, jackets salopettes, helmets, backpacks and the like.

### Background to the Invention

There are currently in use a wide variety of location determination systems, perhaps the most common of which is the Global Positioning System (GPS) which generally consists of multiple geostationary satellites which continuously or intermittently broadcast radio signals indicative of a particular satellite's position and which, when signals are received from at least 4 (but more commonly 5) satellites by a suitably enabled earth-based receiver, can be utilised to pinpoint to location of that device on the surface of the earth. The skilled reader will be well aware of the widespread adoption of portable navigation devices (PND) by vehicle users which employ GPS technologies to provide navigation services within a road network digitally stored within, and graphically displayed on, the device. Although PNDs have revolutionised in-car navigation and largely rendered the common atlas obsolete, the devices remain bulky as they require a clear display screen, and furthermore, although some devices are capable of transmitting their current location to other devices or systems if required, the devices are really not designed for anyone other than their owners - that is, they are not designed with the aim of providing some indication of an entity's location to someone other than their owner.

In alpine applications, where the weather and other climatic conditions are often extreme and particularly inhospitable to electric and electronic devices, other entity location devices and systems are known. For example, The RECCO^{®} Rescue System is a two-part technology incorporating on one hand a detector which broadcasts a specific radio or other frequency signal, and on the other hand a reflector device which reflects the detector-broadcast signal back thereto such that not only is the reflector device identified to the detector, but the detector is also provided with some indication of the position, or at least some indication of directionality, of the reflector relative to the detector, and thus the owner or wearer of the reflector can be quickly located. This system is commonly employed in Ski resorts and other alpine areas having mountain rescue teams, who carry the RECCO^{®} detectors. The reflectors are bought or rented by skiers, riders and other persons within the resort, so in the event that a wearer of a reflector becomes lost or buried (for example in an avalanche), then the rescuer utilising his detector is directed very quickly to the wearer. Unlike other technologies, multiple reflectors of this type on a person can improve detection. The RECCO^{®} Rescue System is based on radar technology as there is no need to precisely locate the owner or wearer of a reflector on the surface of the earth, only to provide some indication of their location relative to the detector.

An alternative to the RECCO^{®} system is for individuals to purchase dedicated avalanche transceiver kits. However, as with the RECCO^{®} system, such kits are expensive (at least £200), and there is the further drawback that while many off-piste skiers/boarders, and more adventurous mountaineers might possess these devices, many are unaware of how they work and if not properly enabled and activated, the devices and systems would be useless if their owners/wearers were involved in a calamity.

A system similar to the RECCO^{®} system but much simpler and cost-effective is one known as the Ski Retriever system. This system is adapted primarily for finding skis and boards from which their wearer has become separated, for example after a fall during off-piste skiing, or when skiing in fields of deep powder snow. The Ski Retriever system include a homing tags adapted to be adhered or otherwise affixed to a ski or board, and a handheld, credit card-sized locator device which, in much the same way as the RECCO^{®} system, transmits a radio signal which is detected and reflected and/or re-transmitted by the homing device so that the locator device can provide an indication to the user of the direction of the source of the retransmitted signal. A fundamental drawback of the Ski Retriever device however is the relative range - the system does not function at all beyond any significant distance, for example 50m, and therefore is of only limited use, i.e. it's only use is for the short-range locating of equipment, and of no use at all as a means of establish the location of entities within a wider area, for example an entire ski resort, or further afield. Alpine equipment, particularly ski and board equipment such as skis, snowboards and bindings therefor, is often expensive and the price and desirability of such equipment means that thefts are commonplace. Somewhat surprisingly, alpine equipment is also often the subject of fraudulent insurance claims. In either case, the overall costs of insurance will inevitably increase. A cost-effective entity tracking system which was particularly adapted for high-value alpine equipment would certainly go some way to mitigating the risks and losses of insurers, particularly if the equipment being the subject of an insurance claim could be quickly located and/or recovered.

The above systems and/or devices do not lend themselves particularly well to a quick, easy, and cost-effective solution for the locating of entities in alpine areas such as ski resorts, and which have an additional security benefit of being capable of locating entities which have been intentionally misappropriated as a result of theft or abduction.

Published Patent Specification number US2009/032517 A1 (Sopuch) is an example of prior art disclosing a heating system integrated in skis. Published patent specifications US6275153 B1 (Brooks) and WO01/13137 A2 (Grimani) represent prior art concerning alarm devices for protecting and/or receiving skis. Specification EP0915442 A1 (Balzamo) discloses solar cells to support batteries. US2012/0249798 A1 (Kim) discloses a system to retrieve a child via a tag device including a main power unit comprising a plurality of piezoelectric elements for generating an electric energy if pressure is applied.

The overall problem to be solved by the present invention is that of providing autonomous power to a worn item. None of the prior art documents above solves this in the way now claimed by the Applicant. They all teach different solutions to the technical problem, but none of them solves it in the way now proposed, i.e. by generating storable electrical energy as a result of flexure of piezo-electric fibres responding to a flexing, in use, of the item concerned.

Such a solution is not disclosed in any of the prior art disclosed above.

### Summary of the Invention

In summary (and referring to referenced numerals in the accompanying drawings by way of example only) the invention provides:
An item (10) of apparatus or equipment which, in use, is directly or indirectly worn by a person so that flexure of said item (10) is: initiated by, controlled by, or directly attributable to the motion of said person, said item being passive in that other than its wearer, the item possesses no independent source of power for moving the item, and in which said item is provided with
- an integral source of stored electrical energy (38), and
- an electrically powered radio transceiver (44) capable of both receiving signals representative of a location, or from which a location can be derived, and transmitting signals representative of said location, and the radio transceiver (44) and the integral source of stored electrical energy (38) are directly or indirectly connected within the item (10) such that the former is at least partially powered by the latter; wherein the integral source of stored electrical energy (38) further comprises, and/or is connected at least partially internally within the item to, an integral energy recovery module (40) ***and characterised in that*** the electrical energy to be stored is generated as a result of the flexure of piezo-electric fibres (14; 16) extending within the item (10) so that when the item is in use, the piezo-electric fibres (14; 16) are deformed in unison with the flexure of the item (10).

For the purposes of clarity herein, the term "wear", and its cognates and derivatives, should be considered to encompass not only clothing to which it commonly applies, but also any motion-facilitating apparatus and equipment, such as skis, snowboards, cycles, and the like, which the "wearer" can don, mount, or otherwise connect and/or interact with, and which, most preferably, is fundamentally designed to "fit" one or more aspects of the human anatomy.

Preferably, the radio transceiver derives is primarily, and further preferably solely and exclusively powered by said integral energy recovery system.

Preferably, the item of equipment provides a primary function for its wearer, such as providing warmth, protection, support, or most preferably, the primary function of the item is one which enables or facilitates the self-powered motion of the wearer, especially over snow or ice, through air in the form of flight, over land, or under or through water.

The integral energy recovery system is a piezoelectric, and integrated within an item adapted for self-powered motion of a wearer in such a manner that the compression or tension of the structure of the item or components forming part thereof as a result of their flexure or motion generates storable electrical energy, which can be utilised immediately, or subsequently if stored, to power the radio transceiver.

Most preferably, the item is also integrally provided with control means including processing means which performs at least one of the following functions
- controls the supply of stored electrical energy to the radio transceiver,
- calculates or otherwise derives a location from radio signals received by said radio transceiver,
- controls the transmission of radio signals from and by said radio transceiver, preferably in a periodic or intermittent manner.

Preferably the radio transceiver is capable of receiving, and the control means is capable of processing, any one or more of
- GPS satellite signals,
- Any of the modern mobile, cellular and/or wireless telecommunications and/or data transfer radio signals, including those forming part of the following system: Global System for Mobile Communications (GSM), General Packet Radio Service (GPRS), cdmaOne, CDMA2000, Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/TDMA), and Integrated Digital Enhanced Network (iDEN), high speed downlink packet access (HSDPA), and any other 3G, 4G, 4.5G or 5G technology.

In a yet further preferred embodiment, the signals transmitted from the radio transceiver are mobile telecommunications and/or data transfer signals such as those mentioned above, and which are recognisable to, and receivable by, mobile, cellular or data network base stations in the vicinity of the radio transceiver, as well as (potentially) other mobile telecommunications devices in the vicinity of the item containing the radio transceiver.

In a preferred embodiment, the radio transceiver transmits only, or additionally, short-range radar signals.

In a most preferred embodiment, the radio transceiver includes a subscriber identity module (SIM) card, and such that it can register itself as a node on, and thus become part of, a mobile telecommunications network, albeit as a node which can communicate only basic information, and is not required to, and in some embodiments, not capable of, transmitting signals encoding and/or representing voice communications.

Most preferably, the integral source of stored electrical energy is a rechargeable battery.

In the case where the item of equipment effectively includes an integral mobile telecommunications (or possibly a data network) transceiver including a SIM and corresponding card which registers with and becomes a node on that network, powered by an energy system also integrally provided within the item, this opens up a great many opportunities and advantages whereby existing mobile telecommunications technologies can be leveraged, particularly those adapted for tracking and/or determining the location of telecommunications equipment within the network. As will be apparent to the skilled reader, as the majority of the first world adult population now possess a smartphone, and an even greater proportion of the individuals, both adults and children, partaking in alpine activities will possess and will carry with them at least some type of mobile communications device, and as a result of the invention, it is now possible for such individuals to locate their equipment should they become separated from it for any reason, either unintentionally, through accident, or as a result of the actions of a malicious or criminal third party. For instance, a common problem for off-piste skiers and boarders is that they lose their skis or snowboards in deep powder snow after falling and becoming separated therefrom. Now with the invention, the skier or boarder can simply use their smartphone to quickly locate their equipment.

In a broader application, the invention may be utilised to provide the location of stolen alpine equipment in a geographically very wide area, not merely a ski resort. If alpine equipment enhanced according to the invention is stolen, and subsequently used, then, provided of course that there are no clear external markings or indications that a location system has been embedded within the equipment, then any subsequent use of the equipment will recharge the battery, which will in turn provide power to the radio transceiver within the equipment to enable the transmission of a monitorable and detectable radio (or possibly other frequency band) signal providing an indication of the location of the equipment. Such facility will be of potentially enormous benefit to insurers.

A specific embodiment of the invention is now described by way of example and with reference to the accompanying drawings wherein.

### Brief Description of the Drawings

Figure 1 shows a perspective view of a conventional snowboard in which embodiments of the present invention may be integrated,
Figure 2 shows a sectional elevation of the snowboard of Figure 1 illustrating how internal components may be integrated within the snowboard, in accordance with one embodiment of the invention
Figure 3 schematically illustrates how the integrated components may be connected together within the body of the snowboard of Figs. 1 & 2, and also the constituent parts thereof.
Figure 4 schematically illustrates a smartphone displaying a terrain map and the location of both itself and another entity within the same map;

### Detailed Description

Although the following description is provided with exclusive reference to snowboards (such being considered to be a form of ski) and the manner in which different embodiments of the present invention may be integrated therein, it must be understood that the present invention has far wider application. Indeed Applicant certainly envisages that the invention may easily be extended to any item, or piece of equipment or apparatus commonly worn or mounted by, or on, or otherwise secured to, a person, such items, equipment or apparatus not generally having any independent power source or being motorised but being adapted to provide or facilitate motion of the person through or over solid or fluid media. For example, a bicycle is mounted and ridden by a human, and is caused to move through the air solely by human leg power. More scientifically, the bicycle gains kinetic energy as a result of the work performed on it. As part of this interaction, the present invention might be integrated in the cranks, crankshaft, or crankshaft housing for example, and the work of the human legs might additionally be converted to electrical energy which may be stored, and subsequently used to provide power for the radio transmitter as prescribed by the present invention. However, for the purposes of brevity, the following specific description is limited to snowboards.

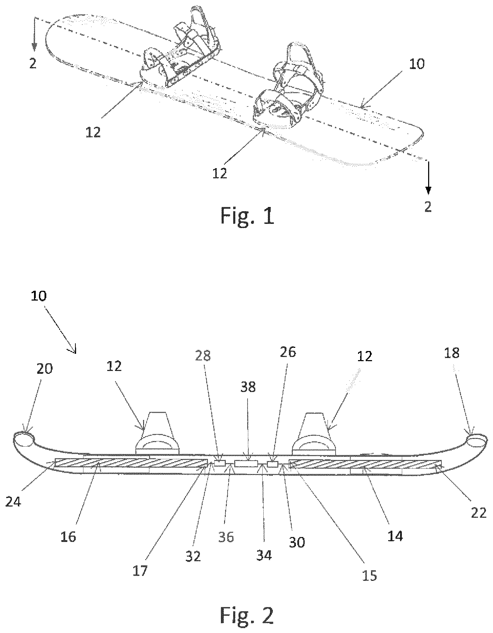

Referring firstly to Figure 1, there is shown a conventional snowboard 10 to the upper surface of which are secured conventional bindings 12. A snowboarder (not shown) secures himself to the board by clipping his boots into the bindings thus rigidly or at least semi-rigidly fixing the boots to the board, both boots and bindings constraining the legs of the wearer to adopt a particular attitude with respect to the board. As the snowboarder begins snowboarding, whether within a groomed piste or not, the waxed lower surface of the board slides over snow with very little resistance. The art of snowboarding itself relies on a combination of skill, balance and effort on the part of the boarder, and the fact that snowboard is flexible and can elastically deform as the rider applies pressure to through his legs, and in turn through the one or both bindings.

In terms of the present invention, the most important attribute of the snowboard is that it is flexible to a certain degree, and elastic (usually back-and-forth bending) deformations occur during use. Such deformations may take the form of the common chattering motion of the board free ends as the rider travels on the board at any speed over undulating and uneven pistes, as well as the more substantial deformations which occur along the length of the board for example during turning, or as more severe forces are exerted on the board by both rider and the underlying terrain. In normal snowboards, the forces applied to the board by both rider and terrain are absorbed by the board, but it is certainly possible that these forces, or rather the deformations in the board that they produce, can usefully be converted into electrical energy using piezoelectric fibres integrally provided within the structure of the board. For example, in Figure 2, a sectional view of board 10 of Figure 1 is shown, and integrated within the board are two sets of piezoelectric fibres 14, 16 each of which extend from their base ends 15, 17 respectively forwardly and rearwardly and most preferably into the corresponding upwardly curved board tips 18, 20, terminating at remote ends 22, 24. Respective base ends 15, 17 of the fibres are electrically connected to respective electronics modules 26, 28 by connectors 30, 32, said modules in turn being electrically connected at 34, 36 to a rechargeable battery 38.

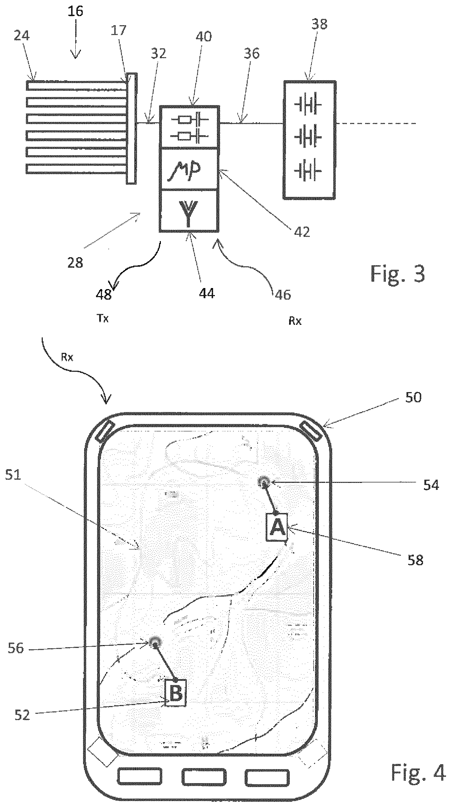

Referring now to Figure 3, the electronics module 28 comprises an electrical energy recovery module 40, a microprocessing module 42, and a radio transceiver module 44 which is capable of both receiving incoming radio or other frequency signals 46 and transmitting radio or other frequency signals 48 remotely.

When the snowboard is in use, the piezoelectric fibres are deformed in unison with the board, and in deforming, the fibres 16 create electric charge which can be harvested by the recovery module and delivered to the rechargeable battery 38. Simultaneously, or alternatively when the board is separated from the rider (in which regard module 28 may additionally include sensing electronics to positively determine such an event), either or both of the fibres 16 and rechargeable battery 38 provide electrical power for processing module 42 and transceiver module 44. It should be mentioned at this stage that while both sets 14, 16 of piezoelectric fibres are shown in Fig.2 as being electrically connected to separate electronics modules 26, 28, each being then electrically connected to rechargeable battery 38, any alternative arrangement may be possible - for example, each of the sets of piezoelectric fibres may be connected to only a single electronics module of the type illustrated in Figure 3, or there may be separate electronics modules as shown in Figure 2 but each may possess only certain functional aspects - for instance, in one embodiment, only one processor module 42 and one radio transceiver module is strictly necessary in any board, though providing 2 such modules does allow for redundancy in the event one fails.

Once a rider is separated from his board, or if the rider himself or a third party wishes to determine the location of the board, typically that person will utilise a smartphone having pre-loaded thereon a suitable application and which is capable of:
- determining its own location using any known location-determining technique (e.g. GPS, assisted GPS (A-GPS), triangulation with cell base-stations in range, angle of arrival (AoA), time of arrival (ToA), line of bearing (LoB), received signal strength (RSS), etc.) and (most preferably) correlating this location with a map and displaying both location and map on a display screen of the device, and
- receiving radio or other frequency band signals transmitted originally from the radio transceiver of the board, optionally via one or more cellular base stations if required, and containing or being in some way representative of an absolute or relative location of the board, and which can thus also and simultaneously be correlated to, and displayed together with, both said map and the location of the device itself, most preferably at a scale (which naturally depends on the relative distance of the board from the device attempting display the location thereof) which allows both device and board locations to be simultaneously displayed.

As can be seen from Figure 4, a smartphone 50, preloaded with a suitable software application similar in functionality to the known "Find my Friends" application developed and provided by Apple Inc., can be used to find any entity which is specifically transmitting its location or has registered itself as a node in a cellular mobile telecommunications network. In the Figure, the smartphone is shown graphically displaying a terrain map indicated generally at 51, and additionally two separate entity location icons 52, 54 are displayed, optionally (and preferably) with graphical labels 56, 58 so that a user can immediately and clearly recognise firstly his own currently location, secondly the remote location of the entity he wishes to be reunited with, and further preferably (by virtue of displaying the map in a "north-up" orientation), some indication of the direction he must move to approach the remote entity. Although in this Figure only 2 entity location representing icons are displayed, it is of course possible to display many such icons if many different entities are desired to be located.

As mentioned previously, the software application may be used to locate any entity in a very wide geographical area, and although the application is shown operating on a smartphone, it will be immediately understood that the software may be operated on a more conventional desktop resource operated by an Insurance company or one of their partner companies. In this latter case, there is of course no requirement that the digital map data used be limited only to ski resorts - indeed it may be possible to locate entities as hereinbefore described effectively globally.

## Claims

1. An item (10) of apparatus or equipment which, in use, is directly or indirectly worn by a person so that flexure of said item (10) is: initiated by, controlled by, or directly attributable to the motion of said person, said item being passive in that other than its wearer, the item possesses no independent source of power for moving the item, and in which said item is provided with
- an integral source of stored electrical energy (38), and
- an electrically powered radio transceiver (44) capable of both receiving signals representative of a location, or from which a location can be derived, and transmitting signals representative of said location, and the radio transceiver (44) and the integral source of stored electrical energy (38) are directly or indirectly connected within the item (10) such that the former is at least partially powered by the latter; wherein the integral source of stored electrical energy (38) further comprises and/or is connected at least partially internally within the item to an integral energy recovery module (40) ***and characterised in that*** the electrical energy to be stored is generated as a result of the flexure of piezo-electric fibres (14; 16) extending within the item (10) so that when the item is in use, the piezo-electric fibres (14; 16) are deformed in unison with the flexure of the item (10).

## Patentansprüche

1. Ein Gegenstand (10) eines Geräts oder einer Ausrüstung, der im Gebrauch direkt oder indirekt von einer Person getragen wird, so dass die Biegung des Gegenstands (10) durch die Bewegung der Person ausgelöst, gesteuert oder ihr direkt zugeordnet werden kann, wobei der Gegenstand insofern passiv ist, als er außer seinem Träger keine unabhängige Kraftquelle zur Bewegung des Gegenstands besitzt, und bei dem der Gegenstand mit folgenden Merkmalen versehen ist
- eine integrale Quelle für gespeicherte elektrische Energie (38) und
- einen elektrisch betriebenen Funksender/Empfänger (44), der in der Lage ist, sowohl Signale zu empfangen, die für einen Standort repräsentativ sind oder von denen ein Standort abgeleitet werden kann und das Senden von Signalen, die für diesen Standort repräsentativ sind,
und der Funksender/Empfänger (44) und die integrale Quelle gespeicherter elektrischer Energie (38) direkt oder indirekt innerhalb des Gegenstands (10) so verbunden sind, dass der erstere zumindest teilweise von dem letzteren gespeist wird; wobei die integrale Quelle gespeicherter elektrischer Energie (38) ferner ein integrales Energierückgewinnungsmodul (40) umfasst und/oder zumindest teilweise innerhalb des Gegenstandes mit diesem verbunden ist, *und **dadurch gekennzeichnet, dass*** die zu speichernde elektrische Energie als Ergebnis der Biegung piezoelektrischer Fasern (14; 16), die sich innerhalb des Gegenstandes (10) erstrecken, erzeugt wird, so dass, wenn der Gegenstand in Gebrauch ist, die piezoelektrischen Fasern (14; 16) im Einklang mit der Biegung des Gegenstandes (10) verformt werden.

## Revendications

1. Un article (10) d'appareil ou d'équipement qui, en utilisation, est directement ou indirectement porté par une personne de sorte que la flexion dudit article (10) est : initiée par, contrôlée par, ou directement attribuable au mouvement de ladite personne, ledit article étant passif en ce sens qu'en dehors de son porteur, l'article ne possède aucune source indépendante de puissance pour le déplacer, et dans lequel ledit article est pourvu de
- une source intégrale d'énergie électrique stockée (38), et
- un émetteur-récepteur radio alimenté électriquement (44) capable de recevoir à la fois des signaux représentatifs d'un emplacement, ou à partir desquels un emplacement peut être dérivé, et transmettre des signaux représentatifs dudit emplacement,
et l'émetteur-récepteur radio (44) et la source intégrale d'énergie électrique stockée (38) sont directement ou indirectement connectés à l'intérieur de l'article (10) de sorte que le premier est au moins partiellement alimenté par le deuxième ; dans lequel la source intégrale d'énergie électrique stockée (38) comprend en outre et/ou est connectée au moins partiellement à l'intérieur de l'article à un module intégral de récupération d'énergie (40) *et **caractérisé en ce que*** l'énergie électrique à stocker est générée en conséquence de la flexion de fibres piézoélectriques (14 ; 16) s'étendant à l'intérieur de l'article (10) de sorte que lorsque l'article est utilisé, les fibres piézoélectriques (14 ; 16) sont déformées à l'unisson avec la flexion de l'article (10).
